(19) Europäisches Patentamt
European Patent Office
Office européen des brevets

(11) **EP 3 869 970 B1**

(12) **EUROPEAN PATENT SPECIFICATION**

(45) Date of publication and mention of the grant of the patent:
**11.03.2026 Bulletin 2026/11**

(21) Application number: **19789687.1**

(22) Date of filing: **22.10.2019**

(51) International Patent Classification (IPC):
***A23G 1/44*** *(2006.01)* ***A23G 3/44*** *(2006.01)*
***A23G 4/14*** *(2006.01)* ***A23G 9/38*** *(2006.01)*
***A23J 3/10*** *(2006.01)* ***A23L 33/19*** *(2016.01)*
***A23J 3/26*** *(2006.01)*

(52) Cooperative Patent Classification (CPC):
**A23G 1/44; A23G 3/44; A23G 4/14; A23G 9/38; A23J 3/10; A23J 3/26**

(86) International application number:
**PCT/EP2019/078637**

(87) International publication number:
**WO 2020/083860 (30.04.2020 Gazette 2020/18)**

(54) **A METHOD FOR PREPARING A CONFECTIONARY MASS AND CONFECTIONARY MASS**

VERFAHREN ZUR HERSTELLUNG EINER SÜSSWARENMASSE UND SÜSSWARENMASSE

PROCÉDÉ DE PRÉPARATION D’UNE MASSE DE CONFISERIE ET MASSE DE CONFISERIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.10.2018 EP 18202103**

(43) Date of publication of application:
**01.09.2021 Bulletin 2021/35**

(73) Proprietor: **FrieslandCampina Nederland B.V.**
**3818 LE Amersfoort (NL)**

(72) Inventors:
- **DE KORT, Esther Jacqueline Petra**
**6708 WH Wageningen (NL)**
- **ALTING, Aart Cornelis**
**6708 WH Wageningen (NL)**
- **WALSMA, Bouwe**
**6708 WH Wageningen (NL)**
- **BLANCO FERNÁNDEZ, Luis**
**6708 WH Wageningen (NL)**

(74) Representative: **FrieslandCampina IP Department**
**Bronland 20**
**6708 WH Wageningen (NL)**

(56) References cited:
**EP-A1- 2 545 789** **AU-A4- 2009 101 002**
**GB-A- 1 594 104** **GB-A- 2 005 981**
**GB-A- 2 440 611** **SU-A1- 594 948**
**US-A1- 2004 142 093** **US-A1- 2007 026 129**

- **DATABASE INSPEC [online] THE INSTITUTION OF ELECTRICAL ENGINEERS, STEVENAGE, GB; 30 April 2017 (2017-04-30), BANACH J C ET AL: "Particle Size of Milk Protein Concentrate Powder Affects the Texture of High-Protein Nutrition Bars During Storage", Database accession no. 17113891**
- **JOURNAL OF FOOD SCIENCE WILEY USA, vol. 82, no. 4, 30 April 2017 (2017-04-30), pages 913 - 921, ISSN: 0022-1147, DOI: 10.1111/1750-3841.13684**
- **DATABASE MEDLINE [online] US NATIONAL LIBRARY OF MEDICINE (NLM), BETHESDA, MD, US; April 2017 (2017-04-01), BANACH J C ET AL: "Particle Size of Milk Protein Concentrate Powder Affects the Texture of High-Protein Nutrition Bars During Storage.", Database accession no. NLM28267879**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 869 970 B1

- BANACH J C ET AL: "Particle Size of Milk Protein Concentrate Powder Affects the Texture of High-Protein Nutrition Bars During Storage.", JOURNAL OF FOOD SCIENCE APR 2017, vol. 82, no. 4, April 2017 (2017-04-01), pages 913 - 921, ISSN: 1750-3841

## Description

The present invention relates to a protein-rich confectionary product, such as a protein-rich food bar, respectively a confectionary mass for such a confectionary product wherein at least part of the protein is provided by a caseinate powder. Further, the invention relates to a method for preparing a confectionary mass or product according to the invention. A caseinate powder is used in the preparation of a confectionary mass or product according to the invention.

Confectionary products and confectionary masses for preparing confectionary products comprising protein are well known in the art. Confectionary masses are substances that can be subjected to a shaping process, such as rolling, extruding, depositing and removing from refrigerated drums, pressing, moulding and the like. Thus, these masses generally are non-fluid but deformable at ambient temperature, at least until after having been shaped into a desired form, such as a bar. They typically have a dough-like consistency. Accordingly they are also referred to in the art as 'doughs'. After having been shaped, the consistency of the mass may change. The mass may either harden or become too easily deformable to the extent that it loses its dough-like character.

US 2004/142093 A1 relates to a confectionery product having a protein to carbohydrate relative weight ratio higher than 1.

WO 2005/089255 relates to a confectionary mass, used as a layering mass and observes that a typical utility for such a layered product is as a nutritional or candy bar. It recognizes that conventional confectionery layering masses or materials often have excellent organoleptic properties when considered as stand-alone products,but may be inappropriate nutritionally for incorporation into confectionery products that are medical or nutritional foods, such as nutrition bars. For example, such conventional materials are high in carbohydrate, and low in protein, and their use in multi-layered products at sufficient levels to ensure an organoleptic advantage will downgrade the nutritional profile of the final product such that it may become unacceptably high in carbohydrate or low in protein. In WO 2005/089255 a layering mass for a confectionary is proposed with 10% to 55% by weight of protein. The layering mass is said to be soft, chewable and pliable. In the Examples, formulations are shown having a high gelatine content. Further milk protein (casein and whey protein) is present and - in a number of examples - a vegetable protein (soy protein). Gelatine (hydrolysed collagen) is a protein that is well known to impart a soft, chewable quality to confectionary products, whereas other proteins, such as dairy proteins and various vegetable proteins, tend to contribute to hardening of the mass. This is also observed in EP 1 839 496, which relates to high protein snack bars. It states that during shelf life, the proteinaceous core portion of conventional high protein snack bars tend to harden and become firm, and no longer are soft, moist and chewy as desired. This hardening degrades the bar texture and flavour, which shortens the product's useful shelf life. Inclusion of gelatine in the food bar formula is thought to mitigate the problem. However, nutritionally, gelatine generally is considered a low quality protein. Protein quality usually is assessed by two major factors: how well the protein satisfies amino acid requirements and the digestibility of the protein. A high quality protein contains the essential amino acids in adequate amounts, and is digestible and absorbed by the body. In addition, gelatine can have a negative impact on taste appreciation.

EP 1 839 496 A1 addresses the loss of softness during shelf-life, by providing a protein blend comprising a combination of intact proteins, casein, and partially hydrolysed dairy protein and partially hydrolysed legume protein in a total amount effective to reduce hardness development during processing and shelf life. In more detail, a protein blend is claimed comprising 18- 28 wt.% partially hydrolysed dairy protein, 5-15 wt.% partially hydrolyzed legume protein, 20-30 wt.% intact dairy protein,5- 15 wt.% intact legume protein, and 26-36 wt.% acid casein or edible salt thereof. The need for a combination of that many proteins makes the formulation more complicated. Also the need for legume protein may make the product unsuitable for use by people suffering from a legume allergy, which limits its applicability. Further, the amino acid composition of legume proteins is less favourable, nutritionally, for humans than milk proteins. Furthermore, legume proteins have an effect on taste that is different from milk protein, and their presence can have an effect on taste that is less appreciated (an off-taste) by a significant number of consumers. There is a need for a way to provide a product with good shelf life, also in the absence of legume protein. Furthermore, the examples shown in EP 1 839 496 A1 still have a relatively low protein content. It would in particular be desirable to provide a confectionary mass respectively shaped confectionary product that has a total protein content of 30 wt.% or more, wherein at least a major part, preferably essentially all protein is a milk protein. After all, milk proteins are renowned for their excellent nutritional value.

It is further known that particle size of protein powders affects the properties of nutritional bars, made with such powders. However, the effects of changes in particle size properties can be diverse, e.g., dependent on the type of protein. For instance, Banach et al. ('Particle Size of Milk Protein Concentrate Powder Affects the Texture of High-Protein Nutrition Bars During Storage', Journal of Food Science, Vol. 82, Nr. 4, 2017, p913 - 921) mention in the introduction that

- use of agglomerated micellar casein concentrate (MCC) particles resulted in powdery and texturally more stable than control bars, formulated with non-agglomerated MCC;
- jet-milled flour produced harder bread compared to non-milled control;
- milling whey protein concentrate (WPC) increases solubility, hydrophobicity, oil binding capacity and foaming properties;

- for nutritional bars made with soy protein a more soluble protein source provides less softness.

'Banach et al' further state that it was unknown how particle size reduction via jet milling would affect the functional properties of milk protein concentrate (MPC) or its performance in high protein nutritional bars. Accordingly, they studied the effects of jet milling and they found - amongst others - that bars made with jet-milled WPC increased significantly in hardness over time, compared to a control and freeze dried WPC.

A need remains to provide a protein-rich confectionary product, such as a protein-rich food bar, wherein at least a substantial part, in particular essentially all of the protein is provided by one or more milk proteins. In particular there remains a need to provide such confectionary product having an appreciable softness, preferably for a pro-longed time. The present inventors investigated the effect of various techniques to alter a property of a specific dairy protein, namely caseinate (roller dried or spray dried calcium caseinate) on texture of a high protein food bar made with the caseinate. Those techniques included gravity/wind sieving, milling, compacting, freeze drying, heating and lowering the pH. Gravity or wind sieving of the caseinate to collect different powder size fractions did not result in fractions with which softer bar textures could be made. Heating resulted in a reduction of moisture content and solubility in water, however no improvement in bar texture was observed. The inventors also tried to change the solubility and pH of the protein powders, and to freeze dry the caseinate powders. These all gave the opposite of a desired texture effect: the firmness of the bars increased instead of the bars becoming softer.

However, the inventors did unexpectedly find that a mechanical densifying treatment of a caseinate powder, i.e. a mechanical treatment wherein the tapped bulk density of the powder is increased, has an advantageous effect on the properties of the obtained caseinate powder, at least in that a food product, such as a high protein confectionary product, having such caseinate powder as an ingredient, has an altered texture. In particular, it has been found that a high protein confectionary product which has been made with the caseinate powder has a softer texture, more in particular a prolonged softer texture.

The method for preparing the caseinate powder, comprises subjecting caseinate particles to a densifying treatment selected from the group of dry-milling, dry-compacting and dry-extruding.

It was found that a high-protein confectionary product, made with caseinate particles obtained by this method as an ingredient, had a lower firmness (higher softness) directly after preparation, and after storage for *e.g.* a month or more, preferably for at least about 3 months, in particular for at least about 6 months, *e.g.* up to about 9 or about 12 months. Thus, the caseinate powder contributes to a prolonged softness. They also found that the required mixing time with other ingredients for a high-protein confectionary mass was reduced, compared to the control (the same caseinate but not subjected to the densifying treatment).

The confectionary mass in accordance with the invention contains a high amount of dairy protein and this will provide the consumer with healthy and nutritional food ingredients while he or she enjoys the good taste and texture that this invention contributes.

The caseinate powder has one or more, most preferably each of the following properties

- a tapped bulk density, ISO 8967/IDF 134:2005 625 taps, of 575-750 g/l;
- a true density (air), as determined by gas pycnometry, of 1.30-1.32 g/ $cm^3$.

Good results with respect to obtaining confectionary mass with improved softness properties have been achieved with a caseinate powder, wherein the tapped bulk density is in the range of 575-750 g/l and the true density (air) is in the range of 1.30-1.32 g/l.

The inventors further investigated possible explanations for the advantages. Considering the teaching of 'Banach et al', they evaluated the effect of the size reduction treatment on solubility, but no difference in solubility between the milled or compacted powders and the caseinate before milling or compacting was found. They also investigated the effect of increasing tapped bulk density. Thus, they compared various calcium caseinate powders having a tapped bulk density in the range of about 400 g/l to about 1000 g/l and they found a positive correlation between tapped bulk density of the caseinate powder and softness of high protein confectionary masses made with the caseinate powder. Further, relevant features of the caseinate powders with respect to softness in confectionary massed made with said powders include true density (air).

The caseinate powder has in particular been found suitable to provide a confectionary mass, suitable for forming into a shaped confectionary product, having a protein content of 30 wt.% or more, whilst having satisfactory softness properties.

Accordingly, the invention relates to a method for preparing a confectionary mass,
comprising at least 30 wt.% based on total weight of protein, the method comprising blending

(i) divalent metal caseinate powder having one or more of the following properties:

- a tapped bulk density, ISO 8967/IDF 134:2005 625 taps, of 575-750 g/l,
- a true density (air), as determined by gas pycnometry, of 1.30-1.32 g/ $cm^3$

(ii) a liquid phase comprising one or more further ingredients for the confectionary mass, thereby obtaining said confectionary mass.

The invention further relates to a confectionary mass comprising at least 30 wt.% based on total weight of protein, wherein at least 20 wt.%, preferably 30 - 90 wt.%, more preferably 40 - 80 wt.%, in particular 50-75 wt.% of the protein is a divalent metal caseinate, which divalent metal caseinate is provided by a divalent metal caseinate powder having one or more of the following properties:

- a tapped bulk density, ISO 8967/IDF 134:2005 625 taps, of 575-750 g/l,
- a true density (air), as determined by gas pycnometry, of 1.30-1.32 g/ $cm^3$.

Advantageously, the confectionary mass according to the invention contains a high amount of dairy protein and this will provide the consumer with healthy and nutritional food ingredients while he or she enjoys the good taste and texture that this invention contributes. Thus, usually more than 50 wt.% of the protein, preferably 85-100 wt.%, more preferably 95-100wt.%, in particular 98-100 wt.% is milk protein, based on total protein of the confectionary mass.

It is further an advantage of the present invention that the confectionary mass according to the invention is a (semi-)solid that has sufficient consistency at room temperature (about 25 °C) to allow shaping, without the need for gelatine or collagen hydrolysate or without the need for other non-milk protein based thickening agents or gelling agents. If an additional thickening or gelling agent is used, this is preferably selected from the group of saccharide-type thickeners and gelling agents, such as a gums and other polysaccharides or derivatives thereof with thickening/gelling properties.

The confectionary mass can be shaped to provide a confectionary product, which optionally comprises other components, *e.g.* the shaped mass can be coated with another component. The invention further relates to a method for preparing a confectionary product having a geometrical shape, such as bar, comprising shaping a confectionary mass according to the invention or obtained in a method according to the invention into a desired shape for said confectionary product.

Unless defined otherwise, all technical and scientific terms used herein have the same meaning as commonly understood by one of ordinary skill in the art.

The term "or" as used herein means "and/or" unless specified otherwise.

The term "a" or "an" as used herein means "at least one" unless specified otherwise.

The term "substantial(ly)" or "essential(ly)" is generally used herein to indicate that it has the general character or function of that which is specified. When referring to a quantifiable feature, these terms are in particular used to indicate that it is for 50% or more, for at least 75%, more in particular for at least 90%, even more in particular for at least 95% of the maximum that feature.

The term 'essentially free' is generally used herein to indicate that a substance is not present (below the detection limit achievable with analytical technology as available on the effective filing date) or present in such a low amount that it does not significantly affect the property of the product that is essentially free of said substance or that it is present in such a low amount (trace) that it does not need to be labelled on the packaged product that is essentially free of the substance. In practice, in quantitative terms, a product is usually considered essentially free of a substance, if the content of the substance is 0 - 0.1 wt.%, in particular 0 - 0.01 wt.%, more in particular 0 - 0.005 wt.%, based on total weight of the product in which it is present.

The term "about" in relation to a value generally includes a range around that value as will be understood by the skilled person. In particular, the range is from at least 15% below to at least 15% above the value, more in particular from 10% below to 10% above the value, more specifically from 5% below to 5% above the value.

As used herein, percentages are usually weight percentages unless specified otherwise. Percentages are usually based on total weight, unless specified otherwise.

When referring to a "noun" (*e.g.* a compound, an additive *etc.*) in singular, the plural is meant to be included, unless specified otherwise.

When referred herein to 'room temperature', this refers to the ambient temperature in an <u>indoor</u> environment, which is variable depending on the outdoor temperature and indoor temperature control. Usually, room temperature is in the range of 18-30 °C, in particular about 25 °C. The term 'ambient temperature' in general extends not only to indoor ambient temperature but also outdoor ambient temperature, *e.g.* temperatures that a product or composition may be exposed to during transport, during street-vending *etc.*.

In the present disclosure, pH is defined as the apparent pH at 20 °C, as measurable by insertion of a standard pH electrode in the medium (fluid or non-fluid) of which the pH is measured, unless specified otherwise.

The term 'milk' is used herein for mammalian milk, in particular milk from ungulates, preferably hoofed ungulates, such as cow milk, sheep milk, goat milk, mare, camel and buffalo milk.

For the purpose of clarity and a concise description features are described herein as part of the same or separate embodiments, however, it will be appreciated that the scope of the invention may include embodiments having combinations of all or some of the features described.

Caseinate is a species of the group of proteins called caseins. Other examples of caseins are acid casein, rennet casein and micellar casein. The casein or caseins present in a product, mass or powder according to the invention is (are) typically in a food-grade form. Together with whey proteins, the caseins form the proteins found in milk (i.e. the milk proteins). In accordance with the invention, the casein or whey protein usually is from milk of an ungulate, preferably from sheep goat or cow. Very good results have been obtained with casein from cow milk.

Casein, as found in milk, is a supramolecular association of individual casein subunits: alpha-s1-, alpha-s2-, beta-, and kappa-casein. These fractions are organized within, a micellar structure according to a balance of interactions involving their hydrophobic and hydrophilic groups. The casein micelle is held together by colloidal calcium phosphate. The micellar casein can be reversible dried and reconstituted. The micellar casein can be provided as a relatively pure ingredient, *e.g.* as micellar casein isolate (MCI) or micellar casein concentrate. (MCC). MCI and MCC are obtained by drying (*e.g.*) spray drying a micellar solution of casein. As a rule of thumb, MCI generally contains at least about 90 wt.% micellar casein and up to 10 wt.% whey protein. However, it is also possible to use other ingredients providing micellar casein and a higher relative amount of whey protein, such as whole milk protein, skimmed milk (powder), milk protein concentrate (MPC), milk protein isolate (MPI).

Rennet casein is casein obtained by enzymatic precipitation, as described in Walstra, P. et al., Dairy Science and Technology, CRC Press, 2006, pages 538 and 539.

Acid casein is casein obtained by acid precipitation of casein, typically by acidifying skim milk to the isoelectric point of casein (pH 4.6 - 4.7).

Another form of casein is a co-precipitate of casein and whey protein, *e.g.* by heating skim milk to a high temperature and then precipitating the casein/whey protein complex, usually with calcium chloride.

Caseinate is a non-micellar protein derived from casein, obtainable by acid precipitation from a liquid containing solubilized casein (casein micelles) such as milk, and subsequent neutralization with a base, such as a hydroxide, *e.g.* NaOH, KOH,, $Mg(OH)_2$, $Ca(OH)_2$, $NH_4OH$ or a basic salt, *e.g.* $CaCO_3$, $Na_2CO_3$ or $K_2CO_3$. and mixtures thereof. Like other forms of casein, caseinate is composed of a mixture of four major casein types (alpha S1, alpha S2, beta and kappa casein). However, micellar casein contains calcium and phosphate (so-called calcium phosphate nanoclusters) bound to the protein structure, stabilizing the micellar structure. Caseinate does not contain calcium phosphate nanoclusters, although a caseinate preparation may contain calcium or phosphate.

In accordance with the invention, a divalent metal caseinate powder is prepared by subjecting divalent metal caseinate particles to a densifying treatment.

The divalent metal caseinate particles to be subjected to the densifying treatment are a salt of caseinate and a divalent metal ion, preferably calcium caseinate particles, magnesium caseinate particles or a combination of calcium caseinate and magnesium caseinate. Particularly good results have been achieved with calcium caseinate particles. A confectionary mass comprising a divalent metal caseinate according to the invention typically outperforms a comparable mass wherein the caseinate is another caseinate, such as sodium caseinate or potassium caseinate, at least in terms of softness, in particular prolonged softness.

The divalent metal caseinate particles may be obtained in a manner known *per se.* Generally, the preparation of the divalent metal caseinate particles involves the drying of an aqueous phase wherein the divalent metal caseinate is dissolved or suspended. The divalent metal caseinate particles to be subjected to the densification treatment are usually selected from the group of roller-dried caseinate particles, extruded caseinate particles and spray dried caseinate particles. Roller drying (also known as drum drying), extrusion and spray drying are generally known techniques to obtain caseinate particles. Preferably, the caseinate particles are obtained by roller-drying caseinate in an aqueous phase.

These starting materials (the caseinate particles) have been found to outperform, *e.g.*, caseinate particles obtained by freeze drying. Preferred are roller-dried caseinate particles. The densification treatment, in particular dry-milling, has been found to have a stronger positive effect on such particles than on spray dried caseinate.

The starting material to be subjected to the densification treatment, is usually characterized by at least, one, at least two, or each of the following characteristics, with the proviso that at least one of these characteristics has a higher value than after the densification:

- a D90, as determined by laser diffraction, of 200 μm or more, preferably 250-500 μm, more preferably of 300-500 μm;
- a D50, as determined by laser diffraction, in the range of 100 - 200 μm;
- a D[3;2], as determined by laser diffraction, in the range of 40-100 μm;.

D90 is the diameter at which 90% of the mass that is characterized is comprised of particles with a diameter less than this value.

The D50 is the diameter at which 50% of the mass that is characterized is comprised of particles with a diameter less than this value.

D[3;2] is the volume/surface mean, also known as the Sauter Mean Diameter.

D90, D50 and D[3;2] values can be determined using a Mastersizer 3000 (Malvern Instruments), equipped with dry dispersion unit and operated according to the instruction manual.

Further details on particle characterization can be found, e.g., in the white paper "A basic guide to particle characterization", from Malvern Instruments Limited © 2015, available on internet via: https://www.cif.iastate.edu/sites/default/files/uploads/Other_Inst/Particle%20Size/Particle%20Characterization%20Guide.pdf

The starting material (the caseinate particles) to be subjected to the densification treatment usually has a tapped bulk density, as determined by ISO8967/IDF134:2005 625 taps., of about 500 g/l or less, in particular of 350-495 g/l, more in particular of 400-490 g/l. The tapped bulk density will increase as an effect of the densification treatment.

Further, the starting material usually has a true density (air) as determined using gas pycnometry (e.g. a gas pycnometer from Micromeritics) in the range of about 0.7 to about 1.3 g/cm$^3$.

The densification treatment, optionally in combination with a subsequent fractionation step, *e.g.* sieving, is usually carried out to obtain a powder of which at least 90 wt.% has a size, as determined by laser diffraction of less than 250 μm. Preferably, the obtained powder has one, two, three or each of the following properties:

- a D90, as determined by laser diffraction, in the range of 80- 200 μm, more preferably of 45-195 μm;
- a D50, as determined by laser diffraction, in the range of 15-120 μm;
- a D[3;2], as determined by laser diffraction, in the range of 5-60 μm.

The tapped bulk density is increased by the densification treatment. Further, the densification may be carried out, whereby the true density is increased. The densification treatment, optionally in combination with a subsequent fractionation, is usually carried out to obtain a powder meeting one or both of the following properties:

- a tapped bulk density, as determined by ISO8967/IDF134:2005 625 taps, of 575-750 g/l;
- a true density (air) as determined by gas pycnometry of 1.30-1.32 g/cm$^3$.

In this respect it is observed, that rolled dried divalent metal caseinate or an extruded divalent metal caseinate typically has a higher true density and a higher tapped bulk density than spray dried divalent metal caseinate. Accordingly, a more intense densification treatment is typically needed to get a relatively high tapped bulk density, e.g. of 550 g/l or more or a relatively high true density, e.g. of 1.30 or more, when starting from spray dried caseinate.

Particularly good results in terms of prolonged softness, have been achieved with a confectionary mass, made with a divalent metal caseinate powder, in particular a roller-dried divalent metal caseinate powder, more in particular a roller-dried calcium caseinate powder, according to the invention, wherein the D90 is in the range of 80-200 μm and the powder has one or both of the following characteristics:

- the tapped bulk density of 575-750 g/l;
- the true density (air) of 1.30-1.32 g/ml

Suitable densification treatments are dry-milling, dry-extrusion and dry-compacting. The skilled person will be able to carry out the densification treatment in order to obtain the powder of interest, based on the information disclosed herein, common general knowledge and optionally a limited amount of testing. Dry-milling is particularly preferred. Examples of dry-milling are jet milling, hammer milling, pin milling and air classified milling. In particular good results have been achieved with a densification step comprising pin-milling. If desired, two or more types of milling are combined, such as a treatment with pin-milling followed by hammer milling, or a treatment with hammer milling followed by pin-milling.

Compaction has also been proven to be suitable to obtain an advantageous densified powder of interest. Compacting can involve a granulation effect, as the starting material is pressed through a sieve obtained granulated by pressing it through a sieve. Compaction may thus result in an increase of D90, D50 and/or D[3;2]. If the compacted product has an undesirably high D90, D50 and/or D[3;2], it is usually subjected to a size reduction step, *e.g.* grinding. For analogous reasons, a size reduction step, such as grinding, is usually performed on a powder that has been densified using dry-extrusion if it has an undesirably high D90, D50 and/or D[3;2].

The prepared caseinate powder can be used as such as an ingredient for a food product, or first be subjected to a further treatment, *e.g.*, sieving and/or combined, e.g. blended, with one or more other components, such as one or more other proteins will be described in further detail below.

The caseinate powder is in particular useful as a texture stabilizer for a food product. It is in particular useful to stabilize firmness/softness, thereby delaying hardening of a dimension-stable food product. In principle the food product can be any type of food product, including dairy products (e.g. cheeses and yoghurts), bakery products (e.g. breads, cakes), meat products and confectionary. The caseinate powder may also be used for non-food applications, e.g. as an excipient material in a pharmaceutical product.

It has been fond particularly advantageous as an ingredient for a confectionary mass, especially for a high-protein confectionary food product, such as a high protein nutritional bar or the like.

The confectionary mass respectively the confectionary product in accordance with the invention are essentially solid at 20 °C. This means that they are 'self-supporting', *i.e*. essentially remain their shape when put on a horizontal surface without further support from the sides or top of the matter, at least in air, at a pressure of 1 bar, at a temperature of 20 °C. *I.e.* the product is not visibly fluid. Such matter may also be referred to as self-sustaining matter or dimension-stable matter. Preferably, a confectionary mass or product in accordance with the invention is self-sustaining at a temperature of 25 °C, more preferably at a temperature of 30 °C, in particular at a temperature of 35 °C. The confectionary mass is, at least during processing, malleable, allowing it to be shaped into a desired form, such as a bar, another geometrical shape or figurine to form a confectionary product. Such malleable mass is generally referred to in the art as a dough, or -if intended for the production of a protein bar - as a protein bar dough. The confectionary mass can thus be used as a matrix of a protein bar. Herein other food materials can be dispersed. The shaped mass can be uncoated or form a core of a coated food product, such as a coated protein bar.

The confectionary mass in accordance with the invention typically comprises at least 30 wt.% protein. Preferably, the protein content is at least 32 wt.%, more preferably at least 33 wt.%, more preferably at least 34 wt.%, at least 35 wt.%, at least 37 wt.%, at least 40 wt.%. As the total protein content increases, the hardness of the confectionary mass may increase, but a positive effect on softness during storage has also been observed at higher total protein content, e.g. at a total protein content of 50 wt.%. Thus, in a specific embodiment the protein content is about 50 wt.% or more. The protein content is usually below 75 wt.%, preferably below 70 wt.%, more preferably 65 wt.% or less, in particular 63 wt.% or less, more in particular 61 wt.% or less, more in particular 60 wt.% or less, more in particular 58 wt.% or less, more in particular 55 wt.% or less. In particular for providing a confectionary mass with a very soft initial texture and/or a very soft texture after one month of storage or after several months of storage, the total protein content is preferably less than 50 wt.%, in particular 48 wt.% or less, more in particular 45 wt.% or less, and most particular 42 wt.% or less.

Proteins are molecules and supramolecular structures at least substantially formed of polypeptides. A fraction of the protein in the mass can be protein hydrolysate. Typically, less than 50%, preferably less than 40 wt.%, in particular 30 wt.% or less, based on total protein in a confectionary mass in accordance with the invention is provided by protein hydrolysate. If present, the content of protein hydrolysate, is usually at least 1 wt.% based on total protein, preferably at least about 5 wt.%, based on total protein, more in particular at least 10 wt.%, based on total protein. Typically, the caseinate is essentially non-hydrolysed.

The mass in accordance with the invention contains at least a specific type of casein, namely divalent metal caseinate. Optionally one or more other types of casein are present. In principle, the protein component of a confectionary mass according to the invention can essentially consist of divalent metal caseinate, in particular if the total protein content is relatively low, *e.g.* up to about 35 wt.%. However, generally, the divalent metal caseinate content of the confectionary mass is in the range of 20-90 wt.%, more preferably 30-90 wt.%, even more preferably 40-80 wt.%, in particular 45-75 wt.%, more in particular 50-75 wt.% or 50-70 wt.% or 55-70 wt.%, based on total protein. The divalent metal caseinate generally essentially consists of calcium caseinate, magnesium caseinate or a combination of magnesium caseinate and calcium caseinate. These outperform other caseinates, notably sodium caseinate and potassium caseinate, with respect to a positive effect on softness. Most preferably, the confectionary mass comprises 20-85 wt.%, more in particular 30-80 wt.%, even more in particular 50-75 wt.% calcium caseinate based on total protein.

The casein content of the confectionary mass, or even the total protein content, can essentially consist of caseinate, in particular if the total protein content is relatively low, *e.g.* up to about 35 wt.%.

In an advantageous embodiment, the confectionary mass comprises casein isolate selected from the group of acid casein and rennet casein, preferably acid casein. If present, the total content of acid casein and rennet casein usually is in the range of 8-80 wt.%, preferably of 15 - 70 wt.%. Of these two, acid casein is particularly preferred. Thus, the weight to weight ratio rennet casein to acid casein usually is in the range of 0:1 to 1:1.

The presence of the casein isolate selected from the group of acid casein and rennet casein, and in particular of acid casein, is advantageous, in that confectionary mass of which at least a substantial part of the protein content is such casein has a low tendency of swelling. Acid or rennet casein may remain at least substantially dispersed as a powder in the matrix of the confectionary mass, contributing to a limitation of moisture migrations. It is particularly suitable to provide confectionary masses with a high prolonged softness. At a relatively high total protein content, this is also feasible with acid or rennet casein, in particular when present in the mass in combination with a whey proteins and at least one caseinate powder according to the invention selected from calcium caseinate powder and magnesium caseinate powder. Usually, the acid or rennet casein has a relatively high bulk density, usually of more than 900 g/l, in particular of about 1000 g/l. It is usually prepared by drying on a belt and subsequent milling/grinding.

Good results have been achieved with a confectionary mass, food product or powder that is essentially free of micellar casein, essentially free of casein-whey co-precipitate and/or essentially free of casein hydrolysate.

If present, the content of whey-casein co-precipitate is usually less than 50 wt.%, based on total protein, preferably less than 20 wt.%, more preferably less than 10 wt.%.

If present, the content of the casein hydrolysate is usually less than 50 wt.%, based on total protein, preferably less than 20 wt.%, more preferably less than 10 wt.%.

In an advantageous embodiment, the confectionary mass comprises whey protein. The whey protein is usually from milk of the same mammalian species as the caseinate according to the invention. Good results have been achieved with a mass comprising both caseinate, in particular calcium caseinate, and whey protein from bovine milk. Generally, if present, the whey protein content is in the range of 1-90 wt.%, based on total protein, preferably in the range of 8-80 wt.%, more preferably in the range of 10-70 wt.%, more preferably in the range of 15-70 wt.%, in particular in the range of 20-60 wt.%, more in particular in the range of 20-50, more in particular in the range of 20-45 wt.%. The presence of whey protein affects the texture (more stickiness and/or more chewiness). Whey protein hydrolysate has been found to have a stronger effect in this respect than intact whey protein (whey protein concentrate: WPC, whey protein isolate: WPI). The presence of a whey protein, in particular a whey protein hydrolysate, has also been found to have a positive effect in avoiding the confectionary mass or product to become crumbly during storage. If present, the whey protein hydrolysate content is usually in the range of 1-50 wt.%, based on total protein, preferably in the range of 5-45 wt.%, more preferably in the range of 10-40 wt.%, most preferably in the range of 15-40 wt.%, in particular in the range of 20-35 wt.%.

Surprisingly good results, amongst others in terms of a satisfactory softness, also after storage for *e.g.* 1-6 months, have been achieved with a confectionary mass wherein the protein content essentially consists of milk proteins, in particular a combination of the caseinate in accordance with the invention and whey protein, which whey protein comprise a whey protein hydrolysate and/or intact whey protein. It is in particular surprising that this is feasible in the absence of gelatine and collagen, of which a confectionary mass or confectionary product or powder according to the invention is typically essentially free.

Particularly good results have been achieved, with respect to a prolonged softness, with a confectionary mass having at least 30 wt.% protein, in particular 35-50 wt.% protein, wherein the confectionary mass comprises 40-80 wt.%, in particular 55-75 wt.%, most preferably 65-75 wt.% calcium caseinate (from the calcium caseinate powder in accordance with the invention ), based on total protein and 20-60 wt.%, in particular 25-45 wt.%, most preferably 25-35 wt.% whey protein, the sum of the calcium caseinate and the whey protein being 95-100 wt.% of the total protein content. Herein the whey protein is preferably intact protein or a combination of intact protein as the major whey protein component and whey protein hydrolysate as the minor whey protein content, the wt. to wt. ratio whey protein hydrolysate to intact whey protein generally being in the range of 0:0 to 1:5.

A minor part of the protein of a confectionary mass according to the invention may be non-milk protein *(i.e.* neither a whey protein nor a casein). Such protein can in particular be selected from the group of legume proteins, cereal proteins, fruit proteins, cocoa proteins, nut proteins.

If present, protein from non-dairy origin is usually present as a particulate food material or part of a particulate food material dispersed in the confectionary mass, e.g. cocoa powder, protein crisps, nut particles, cereal particles or the like.

Usually, 85-100 wt.%, preferably 95-100 wt.%, in particular 98-100 wt.% of the confectionary mass, based on total protein, is milk protein.

The confectionary product as a whole can contain one or more additional components (which form visually distinguishable phases, *e.g.* crisps, coatings) in addition to the confectionary mass, these components can be part of a separate layer, provided on at least part of the (shaped) confectionary mass, such as a coating (*e.g.* a chocolate or chocolate compound coating, a yoghurt coating), or they *e.g.* be dispersed in the confectionary mass, *e.g.* fruit (concentrate) pieces, nuts particles, legume particles (such as peanuts or soy, or pieces thereof, *e.g.* puffed) , cereal particles (*e.g.* cereal flakes, puffed cereals), caramel, chocolate pieces, chocolate compound pieces, brownie pieces, protein crisps, *etc.*.

In general, the contribution of such other ingredients to the protein content of the confectionary product as a whole does not exceed that of the milk protein. Thus, generally, the total content of milk protein in a confectionary product is at least 50 wt.%, preferably at least 75-100 wt.%, more preferably 85-100 wt.%, in particular 95-100 wt.% of the confectionary mass, based on total protein. The confectionary product according to any of the preceding claims is advantageously essentially free of gelatine and collagen hydrolysate.

Generally, the confectionary mass further comprises at least one lipid. The at least one lipid is usually selected from the group consisting of triglycerides, phospholipids, glycolipids, including mixtures thereof, such as lecithin. The lipid content is usually in the range of 1-20 wt.%, preferably 2-10 wt.%. The presence of a lipid is desired for its effect on texture and/or mouthfeel. It acts as a plasticizer and in particular contributes to a more smooth mouthfeel. Particularly good results have been achieved with a triglyceride. Accordingly, usually one or more triglycerides usually form 50-100 wt.%, preferably 80-100 wt.% of the lipid content. The triglyceride can be selected from any food-grade triglyceride, in particular from those known in the art for use in the production of protein bars. Particularly good results have been achieved with a triglyceride from palm, palm kernel oil, olive oil, rapeseed oil, sunflower oil and coconut oil. In an advantageous embodiment an MCToil

is used, *i.e.* an oil, which may be a fraction of any of the above mentioned oils, that is enriched in medium chain triglycerides (C6-C12). The lipid may further comprise a phospholipid or a glycolipid. A suitable lipid mixture is lecithin, in particular soy or sunflower lecithin.

The confectionary mass usually further comprises a carbohydrate or derivative thereof. The carbohydrate or derivative usually has a sweetening effect and/or a bulking effect on the confectionary mass. Carbohydrates are molecules consisting of carbon (C), hydrogen (H) and oxygen (O) atoms. The carbohydrate is usually selected from the group of monosaccharides, disaccharides, oligosaccharides, polysaccharides, polyols, sugar alcohols and and steviol glycosides.

Derivatives of carbohydrates are typically derivatives wherein the typical chemical structure of the carbohydrate, such as the saccharide ring of a saccharide, is maintained but wherein one or more hydroxyl groups have been derivatised, *e.g*. substituted with a chlorine atom. A preferred chlorinated saccharide is sucralose.

Preferred saccharides are monosaccharides, in particular hexoses, such as glucose, fructose, maltose and disaccharides, in particular di-hexoses, such as sucrose.

Oligosaccharides have a polymerisation degree of 3-10. Preferred oligosaccharides are fructooligosaccharides (FOS), galactooligosacharides (GOS) maltodextrins, *e.g*. maltotriose, isomaltoses, *e.g*. isomaltopentaose, or another glucose oligomer. Benefits of such oligosaccharides is that they also may have a sweetening effect, especially if they are relatively small but that they are non-digestible, or have reduced digestibility in that they have a reduces calorific value or digested more slowly. Oligosaccharides and polysaccharides that are essentially indigestible or at least have a substantial part that is not digestible, such as inulin, FOS, GOS, polydextrose is that they act as dietary fibre.

It was furthermore found that GOS and FOS are able to further improves the softness of the confectionary mass. The confectionary mass therefore preferably contains FOS and/or GOS, most preferably GOS. The total amount of GOS and FOS in the confectionary mass, based on total weight of confectionary mass, is preferably up to 50 wt%, more preferably 1-20 wt%, and most preferably 5-10 wt%.

Polysaccharides have a polymerisation degree of more than 10. Examples of polysaccharides other than polysaccharidic dietary fibre are starch and long chain maltodextrin (DP>10).

Good results have for example be achieved with a confectionary mass made from glucose-fructose syrup. Glucose syrup or fructose syrup may also be used as a carbohydrate source.

Further typically used ingredients providing a saccharide for a mass or product according to the invention include rice (malt) syrup, soluble corn sugar , maple syrup, date syrup, oligofructose syrup (inulin syrup), partially inverted sugar syrup and honey.

A preferred polyol is glycerol (which has a positive effect on softness, and also is sweet). Sorbitol and erythritol are examples of polyols that can be present as a low-caloric sweeter. Sugar alcohols have the formula $C_{12}H_{24}O_{11}$. Examples of sugar alcohols are maltitol, lactilol and isomalt.

Another example of a carbohydrate which may be present in a confectionary mass according to the invention is an non-caloric sweetener, such as a steviol glycoside, such as stevioside or rebaudioside. Sucralose is a preferred carbohydrate derivative (a chlorinated carbohydrate).

The carbohydrate (+derivative) content can be chosen within wide ranges, depending on desired properties, such as sweetness, softness and protein content. Generally the total content of carbohydrate (+derivative) is chosen, dependent on the protein content, to be in the range of 1 -65 wt.%, preferably in the range of 10-55 wt.%, in particular in the range of 15-45 wt.% In advantageous embodiment, 50-100 wt.% of the carbohydrate (+derivative) content is formed by one or more compounds selected from the group of monosaccharides, disaccharide and polyols. In particular good results have been achieved with a mass comprising glycerol, fructose and/or glucose. If present, the glycerol content is usually in the range of 1-30 wt.%, in particular in the range of 2-15 wt.%, e.g. 3-10 wt.%. Glycerol has a positive effect on softness. Moreover it provides a sweet taste. Accordingly, in particular for a confectionary mass or food product having a low sugar content or a sugar-free product or confectionary mass, good results have been achieved with a high glycerol content, such as a content of 15-30 wt.%.

The sugar content (the total of mono-saccharides and disaccharide) is preferably in the range of 2-52 wt.%, more preferably in the range of 10-45 wt.%, in particular in the range of 20-40 wt.%.

The confectionary mass according to the invention generally has a water activity of 0.75 or less, preferably of 0.70 or less, in particular of about 0.65 or less, more in particular of about 0.6 or more. The water activity can be determined routinely, *e.g*. using a water activity meter with chilled-mirror dew point technique (*e.g*. an AquaLab).

The present invention allows the provision of confectionary masses with a wide range of softnesses, depending on the consumer's desires. The softness can be adjusted as desired, *e.g.* by the choice of proteins and/or the addition of glycerol, *etc.* Softness can be regarded as the reciprocity of hardness. Hardness is determinable with a Texture Analyzer (TA-TX2i, Stable Microsystems, further details provided in the Examples) In order to provide sufficient consistency to the confectionary mass, such that it maintains shape. , the hardness at 20 °C, is generally at least about 100 g, preferably at least about 150 g, in particular at least about 200 g, e.g. about 300 g or more. Generally, the hardness at 20 °C is maximally 2000 g, preferably 1000 g or less, *e.g.* about 800 g or less.

The pH of a confectionary mass according to the invention is usually about neutral or acidic, typically in the range of 4.0-7.5. Preferably the mass has a pH of 6.5 or less, more preferably of 6.3 or less. In a particular embodiment, the pH of the mass is 6.2 or less. The pH of the mass preferably is at least 4.5, more preferably at least 5.0, in particular at least 5.5, more in particular at least 5.7

In principle, the confectionary mass can be prepared on the basis of methods known in the art for preparing confectionary masses. However, for providing a confectionary mass with advantageous properties in terms of softness also after storage, it has been found advantageous to at least provide the caseinate powder and mix it with a liquid ingredient for the confectionary mass.

Apart from advantageous texture effect in the prepared mass and product, the use of the divalent metal caseinate powder according to the invention, in particular the calcium caseinate powder, also offers a benefit in the preparation of the confectionary mass: it reduces mixing time, compared to, *e.g.*, another caseinate, such as sodium or potassium - caseinate or a calcium or magnesium caseinate with a relatively low bulk density and/or a relatively high D90.

The liquid phase usually comprises water, which may be added or be part of the carbohydrate syrup This facilitates mixing with the caseinate powder, when this is added. The water content is advantageously relatively low in order to provide a non-fluid mass having at least a dough-like consistency (hence confectionary masses are also referred to in the art as ' dough' or 'confectionary dough' ) , typically - 5-30 wt.%, in particular about 10 to about 20 wt.%, based on total ingredients. The lipid, in particular triglyceride, is usually dispersed in the liquid phase comprising water. An emulsifier is generally not needed, in particular not if the liquid phase is prepared at a temperature at which the lipid is fluid. If used, preferably lecithin is used, which has been found to have a positive effect on smoothness of the mass. The liquid phase further typically comprises the carbohydrate or carbohydrate derivative. Glycerol is a carbohydrate that is liquid at room or processing temperature. The carbohydrate or carbohydrate derivative that is solid at room or processing temperature, or part thereof is advantageously provided as a syrup, *e.g.* as a fructose syrup, glucose syrup or fructose-glucose syrup. Such syrup may provide all the water that is desired. The phase typically has an acidic pH. Preferably, the pH (as measured at 25 °C) of the syrup is below 5.5, more preferably in the range 3.5-5.0, in particular in the range of about 4.0- 4.5. The inventors found in particular that it was advantageous to use a carbohydrate syrup having a relative low pH, *i.e*. below 5.5, preferably in the range 3.5-5.0.

If whey protein is to be included in the confectionary mass, this can be provided as a powder *(e.g.* with the caseinate powder) and then be added to the liquid phase as a powder, or it can be added to the liquid phase before the divalent metal caseinate powder is mixed with the liquid ingredient. Whey protein, in particular whey protein hydrolysate, is advantageously added to the liquid phase, such as to a sugar syrup.

The liquid phase is usually prepared at a temperature in the range of 20-75 °C, preferably 45-65 °C, in particular about 60 °C or brought to a temperature in that range, after which the casein powder is blended with the liquid phase, to obtain the confectionary mass. If desired, pieces of other food materials (*e.g*. nuts, chocolate, cereal, fruit) can also be added to the liquid at this stage, before, together with or after adding the caseinate powder. This mass can thereafter be shaped in a desired form in a manner known per se, *e.g.* as described in the prior art mentioned above.

If desired the surface of the shaped mass can thereafter be provided with one or more additional materials, which can cover the mass fully or in part. *E.g.* a layer of a confectionary ingredient, such as caramel, yoghurt or a fruit paste, can be provided on an surface-side of the shaped mass, after which, *e.g.* a chocolate or chocolate compound coating or a yoghurt coating can be provided, or a coating can be directly provided on one or more surface-sides of the shaped mass.

Thus, in a specific embodiment, the confectionary product comprises a core and a coating at least substantially covering the core, wherein the core comprises or is said confectionary mass.

However, the confectionary product can also consist of the shaped mass. The amount of additional materials forming the confectionary product in combination with the confectionary mass according to the invention is not critical. However, for a high nutritional value (due to a high nutritious protein content), the confectionary mass forms usually forms 50-100%, preferably 70-100%, more preferably 80-100% in particular 90-100% of the total weight of the confectionary product.

## Examples

### General information on milling trials

### Pin Mill 160Z B01-LP949

The Pin Mill used for these experiments was an Alpine Augsburg, type 160ZB01-LP949, nr 127886. The B01-LP949 mill consists of two different sets of pins plates, one of them is fixed and the other one is rotating. During rotation the interlacing pins create a labyrinth for the product to pass through making the powder particle size be reduced. The breaking of the powder particles is caused by the force of shearing and the impact between particles.

**Small Hammer Mill 9089**

The Hammer mill from Alpine Augsburg type 100P, nr.126855 has a body that consists of one carrousel of hammers that forces the powder trough the surface and the desired perforated mesh. In these experiments different sizes and shapes of openings of the mesh have been tried. With a circular opening hole, the 500-550μm and 100-130μm meshes have been tried.

With a Perfocon shape, the 200μm mesh have been tried.

**Small Hammer Mill T.Peppink & Zn**

The small hammer mill works similar to the small Hammer Mill 9089, but this mill is from T.Peppink & Zn, machinefabriek Amsterdam, has a similar way of milling as a Retsch mill, and the interior set of hammers have a different configuration. For this mill only one set of mesh was available and the Perfocon was 200μm.

**Big Hammer Mill T.Peppink & Zn**

The big hammer mill from T.Peppink & Zn, machinefabriek Amsterdam has the same way of operation as the small hammer mill 9089, but with the difference that the yield is higher and the heat generated is less since it has more surface to dissipate the heat.

Also, it has a different type of mesh. In this mill the mesh is all around the hammers, differing as only having the bottom part in the small hammer mill 9089.

For this equipment two different types of mesh were tried. With a circular opening hole, the 300μm meshes has been tried. With a Perfocon shape, the 200μm mesh have been tried.

**Milling procedure**

Before starting the milling, the correct mesh was installed in the mill and it was verified that the closing screws were well closed. The milling was carried out by pouring the starting powder that was to be densified into the feeding funnel and leaving the mill to feed the powder using the vibrating tray in order to not affect the reproducibility of the experiments. The powder was processed through the mill mechanism and exited via the exit pipe and was collected for further testing.

**General information on compacting trials**

**Preparation of compacting powder**

The compaction trial was performed with an L200/50P roller compactor with integrated flake crusher (Hosokawa Leingarten, Germany). As starting material roller dried Calcium Caseinate (EM9, FrieslandCampina) was used. Compaction was achieved by the compression of powder between two counter rotating rollers of a roller compactor with the aim to compress, i.e. to increase the bulk density, of the powder. The powder was inserted between the rollers in a controlled way. Subsequently, the compacted powder was crushed and pushed through a 1.25 mm or 2.50 mm screen, thus giving coarse material. To match the particle size distribution of EM9, samples were sieved using a 1 mm sieve before further testing.

*Samples:*

- Test I: 90 kN force, roller speed 10 rpm, sieve/screen 1.25 mm, no vacuum
- Test II : two times: 100 kN force, roller speed 6.5 rpm, sieve/screen 2.50 mm, vacuum -0.2 bar
- Reference: untreated calcium caseinate roller dried (REF EM9 )

**Preparation of bar dough**

A protein powder was provided comprising caseinate and optionally whey protein concentrate and/or whey protein hydrolysate. Further a liquid phase was prepared by mixing lipid (MCT-oil from palm kernel oil; Radiamuls MCT 2107K, Oleon), glycerol and glucose/fructose syrup at a temperature of about 60 °C in a Z-blade mixer (Winkworth MZ05-18) or a Hobart N50 mixer. The protein powder was added to the liquid phase in the mixer, whilst mixing was continued, till a dough had formed. Thereafter the dough was placed on bar trays with baking paper in between and compressed using a roller-pin. The dough in the trays was stored overnight at 4 °C. Thereafter the dough was taken out of the trays and cut into bars, which were individually sealed in bags and stored at 20 °C, till further evaluation.

Total protein content of the bar doughs was 35 up to 55 wt.%. The protein component of the masses was provided by one or more of the following:

- Whey protein (NW800F) (whey protein concentrate Nutri Whey 800F, available from FrieslandCampina), having a whey a protein content of 78 wt.%
- Roller dried calcium caseinate, having a calcium caseinate content of 92 wt.% (EM9, obtainable from FrieslandCampina). This EM9 was milled, compacted, or extruded before it was applied in bars.
- Spray dried calcium caseinate (CaCasS) , having a protein content of 92 wt.% was obtained from FrieslandCampina.
- Hydrolysed whey protein (NWH) was Nutri Whey Hydro, available from FrieslandCampina, having a protein content of 80 wt.%.
- Hyvital Whey 8022 (HW8022, a whey protein hydrolysate) having a protein content of 78 wt.%, available from FrieslandCampina DMV.

The masses further contained 5 wt.% glycerol (VWR International) , 5% MCT oil, a carbohydrate syrup, which was either glucose-fructose syrup (G-F syrup, Isosweet 660, Tereos) or Siromix, a glucose-fructose syrup from BelcoSuc, Belgium. Othe carbohydrates used, as source of fibers, were galactooligosaccharides (GOS) from FrieslandCampina (Vivinal GOS Omni) and fructo-oligosaccharides (FOS) from Beneo (Orafi L95).

Maltitol (Maltilite 7575), a sugar alcohol, was obtained from Tereos.

The liquid phase was prepared by mixing lipid, glycerol, and carbohydrate at a temperature of about 60 °C in a Z-blade mixer (Winkworth MZ05-30 18).

The protein powder was added to the liquid phase in the mixer, whilst mixing was continued, till a malleable dough had formed.

Dough composition for the various doughs is given in Tables below. Thereafter the dough was placed on bar trays and compressed using a roller pin with baking paper in between. The dough in the trays was stored 5 overnight at 4 °C. Thereafter the dough was taken out of the trays and cut into bars, which were individually sealed in bags and stored at 20 °C, till further evaluation.

**Texture analysis.**

Texture analysis is performed to determine hardness of protein bars having a thickness of at least 10 mm. The measurements are performed at ambient temperature (about 20 °C) using a Texture Analyzer (TA-XT2i, Stable Microsystems cylindric probe with a diameter of 8 mm was used, with an impact speed of 1 mm/s, penetrating at least 6 mm into the bar. Each sample is measured 5 times.

**Air volume**

Calculated from the true density measurements with the pycnometer with formula:
Air volume (of closed pore volume of vacuole volume, v) is calculated as followed:

$$\Rightarrow v = \frac{\rho_t - \rho_p}{\rho_p \times \rho_t}$$

Of which $\rho t$ is the true density and $\rho p$ the theoretical density. Assumption for the theoretical density is 1.39 based on Buma (Buma T.J.: "The true density of spray milk powder and of certain constituents' (Netherlands Milk and Dairy Journal, 1965, 19, pp. 249-265)) for true density Calcium caseinate-phosphate complexes (1390g/l).

**Example 1: milled roller dried calcium caseinate**

Properties of caseinate powders obtained by various milling steps are shown in Table 1.

By milling the roller-dried calcium caseinate (EM9) the powder properties were considerably changed: i.e. bulk density increased, particle density increased, air volume decreased, and particle size distribution (of which D [3;2] is indicative) decreased. Preparing bars with these densified powders resulted in softer bars than the bars with the reference EM9 powder (and commercially available powders). Milling EM9 with "Pin mill" was the most efficient milling technique and gave the most optimal powder properties for protein bars. The powder properties of Compacted EM9 and the pin mill EM9 are comparable. Pin milled EM9 gives slightly softer bars than compacted EM9 (see compacted trial results below).

Protein bars were prepared with milled powders. Table 2 shows the recipes, all given in grams except for the most left column. The ratio between (milled) EM9, NW800F, and HW8022 was in all recipes to provide proteins in the ratio calcium caseinate (from EM9) to intact whey protein (from NW800F) to hydrolyzed whey protein (from HW8022) of 55/40/5. The glucose-fructose syrup used for this trial was the Isosweet 660 from Tereos Syral in Belgium.

**Table 1: Properties of caseinate powder**

| Products obtained upon milling EM9 | Equipment | D50 | D [3;2] | Bulk Density tapped (g/l) | True density Air (g/cm3) | Air volume (air) (ml/100g) |
|---|---|---|---|---|---|---|
| Reference EM9 | (untreated) | 156 | 87 | 550 | 1.28 | 6.0 |
| EM9 pin mill (4 runs) | Pin mill B01-LP949 | 40 | 25 | 636 | 1.32 | 3.9 |
| EM9 Hammer Mill 550μm | Small hammer mill 9089 (550μm sieve) | 73 | 38 | 581 | - | - |
| EM9 Pin mill+ hammer mill 550μm (3 runs) | Pin mill B01-LP949+ small hammer mill 9089 (550μm sieve) | 37 | 21 | 646 | 1.32 | 3.9 |
| EM9 Small Hammer Mill 200μm sieve | Small hammer mill T.Pep-pink&Zn (200μm sieve) | 33 | 15 | 735 | 1.32 | 3.8 |

**Table 2: Composition Table**

| | Protein powder | | | Liquids | | | Total (g) |
|---|---|---|---|---|---|---|---|
| Bar (% is wt.% protein) | EM9 | NW800F | HW8022 | MCT oil | Glycerol | G-F syrup | |
| 35% bar: Reference EM9 | 78.21 | 56.88 | 7.11 | 17.5 | 17.5 | 172.79 | 350 |
| 35% bar: EM9 pin mill | 78.21 | 56.88 | 7.11 | 17.5 | 17.5 | 172.79 | 350 |
| 35% bar: EM9 Pin mill+ hammer mill 550µm | 78.21 | 56.88 | 7.11 | 17.5 | 17.5 | 172.79 | 350 |
| 35% bar: EM9 Hammer Mill 550µm | 78.21 | 56.88 | 7.11 | 17.5 | 17.5 | 172.79 | 350 |
| 35% bar: EM9 Pin Mill + Small Hammer Mill 200µm | 78.21 | 56.88 | 7.11 | 17.5 | 17.5 | 172.79 | 350 |
| 35% bar: 80% EM9 Pin Mill + 20% CaCas S reference | 78.37 | 57.00 | 7.12 | 17.5 | 17.5 | 172.50 | 350 |
| 40% bar: pin milled EM9 | 89.39 | 65.01 | 8.13 | 17.5 | 17.5 | 152.48 | 350 |
| 40% bar: EM9 40% Pin mill and hammer mill with 550µm sieve | 89.39 | 65.01 | 8.13 | 17.5 | 17.5 | 152.48 | 350 |

**Mixing time**

In all trials performed with the milled Ca Caseinate powders, the mixing time until a cohesive, malleable dough was formed from which a ball could be formed, was considerably shortened. An example of the mixing times is shown in Table 3, below. Table 4 shows the results from the texture analysis. These show that milling of a caseinate powder with the different milling equipment/techniques was effective to make softer bar textures. Also during shelf life the bars stayed softer than the bar prepared with the reference caseinate powder. It was possible to prepare the bars with 40% protein by using milled caseinate powder, whereas with reference caseinate powder the preparation was too challenging: i.e. long mixing times before a cohesive dough was obtained and very hard bars.

**Table 3: Mixing time**

| Bar | Mixing time (min:s) |
|---|---|
| 35% bar: Reference EM9 | 08:00 |
| 35% bar: EM9 pin mill | 02:00 |
| 35% bar: EM9 Pin mill + hammer mill 550µm | 01:15 |

(continued)

| Bar | Mixing time (min:s) |
|---|---|
| 35% bar: EM9 Hammer Mill 550μm | 02:40 |
| 35% bar: EM9 Pin Mill + Small Hammer Mill 200μm | 0.1:00 |
| 35% bar: 80% EM9 Pin Mill + 20% CaCas S RAW | 02:00 |
| 40% bar: pin milled EM9 | 05:30 |
| 40% bar: EM9 40% Pin mill and hammer mill with 550μm sieve | 03:00 |

**Table 4: Texture analysis results**

| TA | 1 week | | 1 month | | 2 months | | 3 months | | 6 months | | 9 months | |
|---|---|---|---|---|---|---|---|---|---|---|---|---|
| | Ave | Sdev | Ave | Sdev | Ave | Sdev | Ave | Sdev | Ave | Sdev | Ave | Sdev |
| 35% bar: Reference EM9 | 800 | 37 | 781 | 86 | 767 | 144 | 863 | 132 | 665 | 76 | 514 | 66 |
| 35% bar: EM9 pin milled | 293 | 36 | 370 | 33 | 252 | 31 | 371 | 47 | 324 | 39 | 261 | 44 |
| 35% bar: EM9 Pin mill+ hammer mill 550μm | 288 | 54 | 333 | 12 | 268 | 44 | 598 | 157 | 381 | 121 | 284 | 73 |
| 35% bar: EM9 Hammer Mill 550μm | 308 | 74 | 326 | 17 | 404 | 67 | 421 | 42 | 321 | 93 | 308 | 51 |
| 35% bar: EM9 Pin Mill + Small Hammer Mill 200μm | 365 | 74 | 377 | 29 | 460 | 66 | 320 | 46 | | | | |
| 35% bar: 80% EM9 Pin Mill +20% CaCasS RAW | 233 | 30 | 371 | 47 | 426 | 50 | 367 | 62 | | | | |
| 40% bar: pin milled EM9 | 1347 | 160 | 1366 | 220 | 2075 | 177 | 2553 | 314 | 2648 | 120 | 1907 | 158 |
| 40% bar: EM9 40% Pin mill and hammer mill with 550μm sieve | 1173 | 141 | 1100 | 166 | 1511 | 174 | 2037 | 281 | 1668 | 129 | 1694 | 320 |

**Example 2: milled spray dried calcium caseinate**

As shown in Table 5, the powder properties of spray dried calcium caseinate (CaCasS) could be changed by dry-milling. However, the bulk density of the milled CaCasS was lower than when using roller dried caseinate as a starting material.

35% protein bars were prepared with reference CaCasS and milled CaCasS. The compositions of the bars are as shown in Table 6 (amounts in grams). The protein powder components were blended in an amount to obtain a protein composition of 55% calcium caseinate and 45% whey protein (40% NW800F, 5% HW8022).

Table 7 shows the results of the texture analysis.

**Table 5: Properties of milled Ca Caseinate Spray powders**

| Products obtained upon milling CaCasS | Equipment | D50 | D [3;2] | Bulk Density tapped (g/l) | True density Air (g/cm3) | Air volume (air) (ml/100g) |
|---|---|---|---|---|---|---|
| Reference CaCasS | NA | 45 | 32 | 385 | 0.76 | 60.5 |
| CaCas S hammer mill 550μm sieve | Small hammer mill 9089 (550μm sieve) | 40 | 20 | 446 | 0.88 | 41.9 |
| CaCas S Pin Mill + Hammer mill 550μm | Pin mill B01-LP949+small hammer mill 9089 (550μm) | 22 | 9 | 451 | 1.2 | 11.2 |
| CaCas S Pin Mill + Hammer Mill 300μm | Pin Mill B01-LP949+ small hammer mill 9089 (300μm) | 23 | 10 | 467 | 1.18 | 12.5 |
| CaCas S Hammer Mill 300μm + Pin Mill | Small hammer mill 9089 (300μm)+Pinn mill B01-LP949 | 22 | 9 | 439 | 1.20 | 11.1 |

**Table 6: Composition table**

| | Protein powder | | | | Liquids | | |
|---|---|---|---|---|---|---|---|
| Bar | CaCas S | NW800F | HW8022 | MCT oil | Glycerol | G-F syrup | Total (g) |
| Reference CaCasS | 78.67 | 57.21 | 7.15 | 17.5 | 17.5 | 171.97 | 350 |
| CaCas S Pin Mill + Hammer mill 550μm | 78.67 | 57.21 | 7.15 | 17.5 | 17.5 | 171.97 | 350 |
| CaCas S Hammer Mill 550μm | 78.67 | 57.21 | 7.15 | 17.5 | 17.5 | 171.97 | 350 |
| CaCas S Pin Mill then Hammer Mill 300μm | 78.67 | 57.21 | 7.15 | 17.5 | 17.5 | 171.97 | 350 |
| CaCas S Hammer Mill 300μm then Pin Mill | 78.67 | 57.21 | 7.15 | 17.5 | 17.5 | 171.97 | 350 |

**Table 7: Texture analyses results**

| Texture Analyser | 1 month | | 2 months | | 3 months | |
|---|---|---|---|---|---|---|
| | **Ave** | **Stdev** | **Ave** | **Stdev** | **Ave** | **Stdev** |
| Reference CaCasS | 1065 | 212 | 1100 | 53 | 2779 | 423 |
| CaCas S Pin Mill + Hammer mill 550μm | 739 | 67 | 908 | 147 | 1507 | 395 |
| CaCas S Hammer Mill 300μm | 634 | 97 | 1245 | 216 | 3087 | 859 |
| CaCas S Pin Mill then Hammer Mill 300μm sieve | 912 | 75 | 931 | 93 | 1569 | 173 |
| CaCas S Hammer Mill 300μm sieve then Pin Mill | 677 | 80 | 792 | 59 | 703 | 71 |

The texture analyses results indicate that milling was effective for the in the table shown milling techniques and equipment combinations. Milling of spray dried caseinate (CaCasS) was not so effective as milling of roller dried caseinate (EM9), as the bulk density of the milled CaCasS only slightly increased. Other powder properties showed more considerable changes, but apparently a high bulk density is the determining factor to make softer dough textures. However, slightly softer bar doughs were formed with milled CaCasS in comparison to bars prepared with the reference CaCasS powder.

**Example 3: varying caseinate and whey protein content**

The EM9 milled with the pin mill was used for this trial.

The glucose fructose syrup from Tereos, called Isosweet 660 was used. The milled EM9 was combined with NW800F or NWH in bars with protein concentrations of 35%, 40%, and 45% protein.

In Table 8 the composition for each of the components are given in grams (all columns except most left. In Table 9, hardness data are shown after 1 week, after 1 month and after2 months of storage.

Bars prepared with milled EM9 were softer than bars prepared with reference EM9. A ratio of 70/30 EM9/NW800F is preferred over a ratio of 55/45, as the bars with 70/30 ratio were softer after production and during shelf life. The higher the protein concentration in the bars, the harder the bars. However, for e.g. the 40% protein bars a hardness below 2000g was obtained by using the 70/30 ratio, whereas with the 55/45 ratio the hardness exceeded the 2000g. Only 35% protein bars were prepared with the reference EM9, as at higher protein concentrations the preparation of a cohesive dough was challenging (extreme long mixing times) and the bars became very hard.

**Table 8: composition**

| Bar | EM9 | Milled EM9 | NW800F | MCT oil | Glycerol | G-F syrup | Total(g) |
|---|---|---|---|---|---|---|---|
| 35% - 55% EM9+45% NW800F * | 78.17 | | 63.96 | 17.50 | 17.50 | 172.87 | 350 |
| 35% - 55% Milled EM9+45% NW800F | | 78.17 | 63.96 | 17.50 | 17.50 | 172.87 | 350 |
| 35% - 70% Milled EM9+30% NW800F | | 97.16 | 41.64 | 17.50 | 17.50 | 176.21 | 350 |
| 40% - 55% Milled EM9+45% NW800F | | 89.34 | 73.09 | 17.50 | 17.50 | 152.57 | 350 |
| 40% - 70% Milled EM9+30% NW800F | | 111.04 | 47.59 | 17.50 | 17.50 | 156.38 | 350 |
| 45% - 55% Milled EM9+45% NW800F | | 100.50 | 82.23 | 17.50 | 17.50 | 132.26 | 350 |
| 45% - 70% Milled EM9+30% NW800F | | 124.92 | 53.54 | 17.50 | 17.50 | 136.55 | 350 |
| * Explanation: protein bar contains 35 Wt.% total protein of which 55% caseinate and 45% whey protein. | | | | | | | |

**Table 9: Texture analyses results on bar doughs**

| TA | 1 week | | 1 month | | 2 months | | 3 months | |
|---|---|---|---|---|---|---|---|---|
| | Average | Stdv | Average | Stdv | Average | Stdv | Average | Stdv |
| 35% - 55% EM9+45% NW800F | 737 | 97 | 650 | 101 | 1403 | 223 | 1003 | 31 |
| 35% - 55% Milled EM9+45% NW800F | 354 | 15 | 294 | 29 | 442 | 28 | 526 | 26 |
| 35% - 70% Milled EM9+30% NW800F | 213 | 38 | 335 | 24 | 179 | 21 | 189 | 15 |
| 40% - 55% Milled EM9+45% NW800F | 1511 | 104 | 2124 | 156 | 2431 | 168 | 3909 | 109 |
| 40% - 70% Milled EM9+30% NW800F | 688 | 68 | 836 | 102 | 920 | 88 | 1785 | 137 |
| 45% - 55% Milled EM9+45% NW800F | 5824 | 224 | 8319 | 378 | 10293 | 581 | 11142 | 481 |
| 45% - 70% Milled EM9+30% NW800F | 2817 | 124 | 3877 | 257 | 4401 | 53 | 5029 | 337 |

**Example 4: high sugar bar recipe**

Bars were made having a concentration of 35-40% protein. Protein composition consisted of 70% milled EM9 (milling by using the pin mill EM9 powder) and Nutri whey 800F or NWH.

In these bar recipes MCT oil (5%), glycerol (5%) and Siromix (rest%) were the other ingredients.

The higher the protein concentration the harder the bars. Bars in which milled EM9 was combined with NWH were softer than bars prepared with NW800F.

Two reference bars with protein concentrations of 35% and 40% were prepared with ref EM9 and NWH. The 40% reference protein bars were much harder than the bar prepared with milled EM9. See Tables 10 and 11.

## Example 5: bars containing fibre

35-45% Protein bars were prepared with pin milled EM9 powder in combination with whey protein (NWH or NW800F). A ratio of 70/30 for the milled EM9/whey protein was used. In this fiber bar recipe maltitol was combined with GOS or FOS.

See Tables 12 and 13.

**Table 10: composition**

| | Protein powder | | | | Liquids | | | |
|---|---|---|---|---|---|---|---|---|
| **Bar** | **Ref EM9** | **Milled EM9** | **NW800F** | **NWH** | **MCT oil** | **Glycerol** | **SIROMIX 70** | **Total dough (g)** |
| 35% REF EM9 70% + NWH 30% | 96.24 | | | 41.25 | 17.5 | 17.5 | 177.51 | 350 |
| 40% REF EM9 70% + NWH 30% | 109.99 | | | 47.14 | 17.5 | 17.5 | 157.87 | 350 |
| 35% REF EM9 70% + NW800F 30% | 96.70 | | 41.44 | | 17.5 | 17.5 | 176.86 | 350 |
| 40% Ref EM9 70% + NW800F 30% | 110.51 | | 47.36 | | 17.5 | 17.5 | 157.13 | 350 |
| 35% Ref EM9 55% + NWH 45% | 77.90 | | | 63.74 | 17.5 | 17.5 | 173.37 | 350 |
| 40% Ref EM9 55% + NWH 45% | 88.35 | | | 72.29 | 17.5 | 17.5 | 154.36 | 350 |
| 35% Milled EM9 70%+NW800F 30% | | 97.16 | 41.64 | | 17.5 | 17.5 | 176.21 | 350 |
| 40% Milled EM9 70%+NW800F 30% | | 111.04 | 47.59 | | 17.5 | 17.5 | 156.38 | 350 |
| 35% Milled EM9 70%+NWH 30% | | 96.70 | | 41.44 | 17.5 | 17.5 | 176.86 | 350 |
| 40% Milled EM9 70%+NWH 30% | | 110.51 | | 47.36 | 17.5 | 17.5 | 157.13 | 350 |

**Table 11: Texture analyser results**

| **TA** | **1 week** | | **1 month** | | **2 months** | | **3 months** | |
|---|---|---|---|---|---|---|---|---|
| **Sample** | **Average** | **Stddev** | **Average** | **Stddev** | **Average** | **Stddev** | **Average** | **Stddev** |
| 35% REF EM9 70% + NWH 30% | 462 | 30 | 938 | 65 | | | | |
| 40% Ref EM9 70% + NWH 30% | 1264 | 64 | 1662 | 221 | | | | |

(continued)

| TA | 1 week | | 1 month | | 2 months | | 3 months | |
|---|---|---|---|---|---|---|---|---|
| Sample | Average | Stddev | Average | Stddev | Average | Stddev | Average | Stddev |
| 35% REF EM9 70% + NW800F 30% | 508 | 46 | 1049 | 230 | | | | |
| 40% Ref EM9 70% + NW800F 30% | 1602 | 148 | 2213 | 192 | | | | |
| 35% ref EM9 55% + NWH 45% | 157 | 5 | 274 | 11 | 474 | 44 | 860 | 26 |
| 10% ref EM9 55% + NWH 15% | 634 | 74 | 1310 | 39 | 2388 | 72 | 3382 | 202 |
| 35% Milled EM9 70%+NW800F 30% | 105 | 6 | 340 | 44 | 693 | 49 | 1012 | 133 |
| 40% Milled EM9 70%+NW800F 30% | 696 | 19 | 1710 | 150 | 2871 | 308 | 3646 | 133 |
| 35% Milled EM9 70%+NWH 30% | 117 | 11 | 303 | 30 | 815 | 93 | 990 | 94 |
| 40% Milled EM9 70%+NWH 30% | 390 | 30 | 1168 | 65 | 2055 | 52 | 2545 | 313 |

**Table 12: Composition**

| | | Protein powder | | | | Liquids | | | | | |
|---|---|---|---|---|---|---|---|---|---|---|---|
| # | Bar | Reference EM9 | Milled EM9 | NW800F | NWH | MCT oil | Glycerol | Maltitol | GOS | FOS | Total |
| R1 | 35% Maltitol + GOS, reference EM9 70% +NWH 30% | 96.24 | | | 41.25 | 17.5 | 17.5 | 151.26 | 26.25 | | |
| R2 | 40% Maltitol + GOS, reference EM9 70% +NWH 30% | 109.99 | | | 47.14 | 17.5 | 17.5 | 131.62 | 26.25 | | |
| R3 | 45% Maltitol + GOS, reference EM9 70% +NWH 30% | 123.74 | | | 53.03 | 17.5 | 17.5 | 111.98 | 26.25 | | |
| R4 | 35% Maltitol + GOS, reference EM9 70% + NW800F 30% | 96.70 | | 41.44 | | 17.5 | 17.5 | 150.61 | 26.25 | | |

(continued)

| | | Protein powder | | | | Liquids | | | | | |
|---|---|---|---|---|---|---|---|---|---|---|---|
| **#** | **Bar** | **Reference EM9** | **Milled EM9** | **NW800F** | **NWH** | **MCT oil** | **Glycerol** | **Maltitol** | **GOS** | **FOS** | **Total** |
| **R5** | 40% Maltitol + GOS, reference EM9 70% + NW800F 30% | 110.51 | | 47.36 | | 17.5 | 17.5 | 130.88 | 26.25 | | |
| **R6** | 35% Maltitol + GOS, reference 55/45 EM9/NWH | 77.90 | | | 63.74 | 17.5 | 17.5 | 147.12 | 26.25 | | |
| **R7** | 40% Maltitol + GOS, reference 55/45 EM9/NWH | 89.03 | | | 72.84 | 17.5 | 17.5 | 126.88 | 26.25 | | |
| **1** | 40% Maltitol + GOS, milled 70/30 EM9/NWH | | 110.51 | | 47.36 | 17.5 | 17.5 | 130.88 | 26.25 | | 350 |
| **2** | 40% Maltitol + FOS, milled 70/30 EM9/NWH | | 110.51 | | 47.36 | 17.5 | 17.5 | 130.88 | | 26.25 | 350 |
| **3** | 45% Maltitol + GOS, milled 70/30 EM9/NWH | | 124.32 | | 53.28 | 17.5 | 17.5 | 111.15 | 26.25 | | 350 |
| **4** | 35% Maltitol + GOS, 70/30 milled EM9/NW800F | | 97.16 | 41.64 | | 17.5 | 17.5 | 149.96 | 26.25 | | 350 |
| **5** | 35% Maltitol + FOS, 70/30 milled EM9/NW800F | | 97.26 | 41.64 | | 17.5 | 17.5 | 149.96 | | 26.25 | 350 |
| **6** | 40% Maltitol + GOS, 70/30 milled EM9/NW800F | | 111.04 | 47.59 | | 17.5 | 17.5 | 130.13 | 26.25 | | 350 |
| **7** | 40% Maltitol + FOS, 70/30 milled EM9/NW800F | | 111.04 | 47.59 | | 17.5 | 17.5 | 130.13 | | 26.25 | 350 |
| **8** | 45% Maltitol + GOS, 70/30 milled EM9/NW800F | | 124.92 | 53.54 | | 17.5 | 17.5 | 110.30 | 26.25 | | 350 |

**Table 13: Texture analyses bar doughs**

| | TA | 1 week | | 1 month | | 2 months | | 3 months | |
|---|---|---|---|---|---|---|---|---|---|
| **#** | **Sample** | **Average** | **Stddev** | **Average** | **Stddev** | **Average** | **Stddev** | **Average** | **Stddev** |
| **R1** | 35% Maltitol + GOS, reference EM9 70% +NWH 30% | 425 | 52 | 509 | 95 | | | | |
| **R2** | 40% Maltitol + GOS, reference EM9 70% +NWH 30% | 980 | 32 | 1097 | 109 | | | | |
| **R3** | 45% Maltitol + GOS, reference EM9 70% +NWH 30% | 3724 | 288 | 4828 | 265 | | | | |
| **R4** | 35% Maltitol + GOS, reference EM9 70% +NW800F 30% | 634 | 146 | 506 | 155 | | | | |
| **R5** | 40% Maltitol + GOS, reference EM9 70% +NW800F 30% | 857 | 47 | 1236 | 113 | | | | |
| **R6** | 35% Maltitol + GOS, **reference** 55/45 EM9/NWH | 248 | 30 | 389 | 39 | 464 | 25 | 475 | 61 |
| **R7** | 40% Maltitol + GOS, **reference** 55/45 EM9/NWH | 1134 | 95 | 1428 | 124 | 1647 | 144 | 1878 | 49 |
| **1** | 40% Maltitol + GOS, milled 70/30 EM9/NWH | 282 | 27 | 316 | 28 | 444 | 13 | 476 | 17 |
| **2** | 40% Maltitol + FOS, milled 70/30 EM9/NWH | 2502 | 21 | 381 | 6 | 405 | 22 | 361 | 26 |
| **3** | 45% Maltitol+GOS, milled 70/30 EM9/NWH | 1378 | 91 | 1549 | 50 | 2246 | 172 | 2024 | 173 |
| **4** | 35% Maltitol+GOS, 70/30 milled EM9/NW800F | 60 | 4 | 85 | 7 | 115 | 3 | 231 | 41 |

(continued)

| | TA | 1 week | | 1 month | | 2 months | | 3 months | |
|---|---|---|---|---|---|---|---|---|---|
| # | Sample | Average | Stddev | Average | Stddev | Average | Stddev | Average | Stddev |
| 5 | 35% Maltitol+FOS, 70/30 milled EM9/NW800F | 60 | 4 | 160 | 42 | 115 | 10 | 120 | 8 |
| 6 | 40% Maltitol+GOS, 70/30 milled EM9/NW800F | 215 | 13 | 293 | 38 | 354 | 23 | 411 | 25 |
| 7 | 40% Maltitol+FOS, 70/30 milled EM9/NW800F | 235 | 33 | 261 | 35 | 304 | 20 | 359 | 29 |
| 8 | 45% Maltitol+GOS, 70/30 milled EM9/NW800F | 1351 | 157 | 1763 | 71 | 2490 | 281 | 1998 | 79 |

**Example 6: Compacting**

35% Protein bars were prepared. Protein composition consisted of 55% caseinate powder (reference, compacted, or milled caseinate), 40% Nutri Whey 800F (FrieslandCampina), and 5% HW8022 (FrieslandCampina). Milling was done with a Retsch mill (Retsch ZM 200 with 80 and 250 μm sieves) at 12000 rpm and subsequent 8000 rpm. Further components were 5 wt% MCT oil, 5 wt% glycerol, and the rest was glucose-fructose syrup (Tereos) used as above.

Bar doughs were made with a Hobart mixer. Bars were stored at ambient temperature.

**Table 14: Comparison of particle properties**

| Sample | Tapped Bulk Density (g/l) | Density air (g/cm3) | Air volume (air) (ml/100g) | D10 (μm) | D50 (μm) | D90 (μm) | D[3,2] (μm) |
|---|---|---|---|---|---|---|---|
| Reference EM9 | 514 | 1.26 | 5.1 | 45 | 151 | 409 | 79 |
| Compacting Test I | 568 | 1.31 | 0 | 46 | 151 | 421 | 91 |
| Compacting Test II | 634 | 1.32 | 0 | 47 | 160 | 717 | 98 |
| Milled EM9 (by Retsch) | 650 | 1.31 | 4.3 | 14 | 55 | 125 | 30 |

**Table 15: Bar hardness measurements**

| Texture analyser results | 1 week | | 1 month | | 2 months | | 3 months | | 4 months | | 5 months | |
|---|---|---|---|---|---|---|---|---|---|---|---|---|
| | Ave | Stdev | Ave | Stdev | Ave | Stdev | Ave | Stdev | Ave | Stdev | Ave | Stdev |
| EM9 | 2148 | 114 | 1798 | 67 | 1523 | 100 | 2793 | 97 | 1834 | 255 | 1677 | 102 |
| compacted EM9 test I | 922 | 72 | 620 | 44 | 819 | 127 | 1408 | 44 | 966 | 109 | 1131 | 68 |
| compacted EM9 test II | 713 | 60 | 595 | 69 | 984 | 123 | 799 | 37 | 711 | 119 | 725 | 71 |

(continued)

| Texture analyser results | 1 week | | 1 month | | 2 months | | 3 months | | 4 months | | 5 months | |
|---|---|---|---|---|---|---|---|---|---|---|---|---|
| | Ave | Stdev | Ave | Stdev | Ave | Stdev | Ave | Stdev | Ave | Stdev | Ave | Stdev |
| Milled EM9 (by Retsch) | 478 | 54 | 377 | 25 | 432 | 166 | 476 | 22 | 852 | 234 | 1185 | 276 |

## Claims

1. A method for preparing a confectionary mass, comprising at least 30 wt.% based on total weight of protein, the method comprising blending

   (i) divalent metal caseinate powder having one or more of the following properties:

   - a tapped bulk density, ISO 8967/IDF 134:2005 625 taps, of 575-750 g/l,
   - a true density (air), as determined by gas pycnometry, of 1.30-1.32 g/ $cm^3$ with

   (ii) a liquid phase comprising one or more further ingredients for the confectionary mass, thereby obtaining said confectionary mass.

2. The method according to claim 1 wherein the divalent metal caseinate powder has been obtained by subjecting divalent metal caseinate obtained by roller-drying in an aqueous phase to a densifying treatment selected from the group of dry-milling, dry-compacting, and dry-extruding, preferably dry-milling, more preferably pin-milling.

3. The method according to claim 1 or 2 wherein the divalent metal caseinate is calcium caseinate or magnesium caseinate.

4. Confectionary mass comprising at least 30 wt.% based on total weight of protein, wherein at least 20 wt.%, preferably 30-90 wt.%, more preferably 40-80 wt.%, in particular 50-75 wt.% of the protein is a divalent metal caseinate, which divalent metal caseinate is provided by a divalent metal caseinate powder having one or more of the following properties:

   - a tapped bulk density, ISO 8967/IDF 134:2005 625 taps, of 575-750 g/l,
   - a true density (air), as determined by gas pycnometry, of 1.30-1.32 g/ $cm^3$.

5. Confectionary mass according to claim 4, wherein the divalent metal caseinate powder has been obtained by subjecting divalent metal caseinate obtained by roller-drying in an aqueous phase to a densifying treatment selected from the group of dry-milling, dry-compacting, and dry-extruding, preferably dry-milling, more preferably pin-milling.

6. Confectionary mass according to claim 4 or 5, wherein the divalent metal caseinate is calcium caseinate or magnesium caseinate.

7. Confectionary mass according any one of claims 4-6, wherein 8-80 wt.%, preferably 10-70 wt.%, more preferably 20-50 wt.% of the protein is whey protein.

8. Confectionary mass according to any one of claims 4-7, wherein 8-80 wt.%, in particular 10-70 wt.%, more in particular 20-50 wt.% of the protein is acid casein or rennet casein.

9. Confectionary mass according to any one of claims 4-8, wherein 85-100 wt.%, preferably 95-100 wt.%, in particular 98-100 wt.% of the total protein is milk protein.

10. Confectionary mass according to any one of the claims 4-9, having one or more hardness characteristics at 20 °C, as determinable with a Texture Analyzer (TA-XT2i, Stable Microsystems):

- an initial hardness in the range of 100-1000 g, preferably 200-600 g
- a hardness after 1 week in the range of 100-1000 g, preferably 200-600 g
- a hardness after 60 days in the range of 100-1000 g, preferably 200-800 g
- a hardness after 90 days in the range of 100-1000 g, preferably 200-800 g
- a hardness after 120 days in the range of 100-1000 g, preferably 200-800 g
- a hardness after 150 days in the range of 100-1200 g, preferably 200-1000 g
- a hardness after 180 days in the range of 100-2000 g, preferably 200-1250 g.

**11.** Confectionary mass according to any of the claims 4-10, comprising 32-65 wt.%, preferably 33-60 wt.%, more preferably 34-60 wt.%, in particular 35-55 wt.% protein based on total weight.

**12.** Confectionary mass according to any one of claims 4-11, additionally comprising at least one oligosaccharide selected from fructooligosacharide (FOS) and galactooligosaccharide (GOS), most preferably selected from GOS wherein the total amount of GOS and FOS in the confectionary mass, based on total weight of the confectionary mass, is preferably up to 50 wt%, more preferably 1-20 wt%, and most preferably 5 -10 wt%.

**13.** A method for preparing a confectionary product having a geometrical shape, such as bar, comprising shaping a confectionary mass according to any of the claims 4-12 into a desired shape for said confectionary product.

**Patentansprüche**

**1.** Verfahren zur Herstellung einer Süßwarenmasse, die wenigstens 30 Gew.-%, bezogen auf das Gesamtgewicht, Protein umfasst, wobei das Verfahren Mischen umfasst von

(i) Caseinatpulver von zweiwertigem Metall mit einer oder mehreren der folgenden Eigenschaften:

- einer geklopften Schüttdichte nach ISO 8967/IDF 134:2005, 625 Schläge, von 575-750 g/l,
- einer wahren Dichte (Luft), bestimmt durch Gaspyknometrie, von 1,30-1,32 g/cm$^3$,

mit
(ii) eine flüssigen Phase, die einen oder mehrere weitere Inhaltsstoffe für die Süßwarenmasse umfasst, um die Süßwarenmasse zu erhalten.

**2.** Verfahren nach Anspruch 1, wobei das Caseinatpulver von zweiwertigem Metall erhalten worden ist durch Unterwerfen von Caseinat von zweiwertigem Metall, erhalten durch Walzentrocknen in einer wässrigen Phase, an eine Verdichtungsbehandlung ausgewählt aus der Gruppe von Trockenmahlen, Trockenkompaktieren und Trockenextrudieren, vorzugsweise Trockenmahlen, bevorzugter Stiftmahlen.

**3.** Verfahren nach Anspruch 1 oder 2, wobei das Caseinat von zweiwertigem Metall Calciumcaseinat oder Magnesiumcaseinat ist.

**4.** Süßwarenmasse, umfassend wenigstens 30 Gew.-%, bezogen auf das Gesamtgewicht, Protein, wobei wenigstens 20 Gew.-%, vorzugsweise 30-90 Gew.-%, bevorzugter 40-80 Gew.-%, insbesondere 50-75 Gew.-%, des Proteins ein Caseinat von zweiwertigem Metall ist, wobei das Caseinat von zweiwertigem Metall durch ein Caseinatpulver von zweiwertigem Metall mit einer oder mehreren der folgenden Eigenschaften bereitgestellt wird:

- einer geklopften Schüttdichte nach ISO 8967/IDF 134:2005, 625 Schläge, von 575-750 g/l,
- einer wahren Dichte (Luft), bestimmt durch Gaspyknometrie, von 1,30-1,32 g/cm$^3$.

**5.** Süßwarenmasse nach Anspruch 4, wobei das Caseinatpulver von zweiwertigem Metall erhalten worden ist durch Unterwerfen von Caseinat von zweiwertigem Metall, erhalten durch Walzentrocknen in einer wässrigen Phase, an eine Verdichtungsbehandlung ausgewählt aus der Gruppe von Trockenmahlen, Trockenkompaktieren und Trockenextrudieren, vorzugsweise Trockenmahlen, bevorzugter Stiftmahlen.

**6.** Süßwarenmasse nach Anspruch 4 oder 5, wobei das Caseinat von zweiwertigem Metall Calciumcaseinat oder Magnesiumcaseinat ist.

**7.** Süßwarenmasse nach einem der Ansprüche 4-6, wobei 8-80 Gew.-%, vorzugsweise 10-70 Gew.-%, bevorzugter 20-50 Gew.-%, des Proteins Molkeprotein ist.

**8.** Süßwarenmasse nach einem der Ansprüche 4-7, wobei 8-80 Gew.-%, insbesondere 10-70 Gew.-%, besonders 20-50 Gew.-%, des Proteins Säurecasein oder Labcasein ist.

**9.** Süßwarenmasse nach einem der Ansprüche 4-8, wobei 85-100 Gew.-%, vorzugsweise 95-100 Gew.-%, insbesondere 98-100 Gew.-%, des Gesamtproteins Milchprotein ist.

**10.** Süßwarenmasse nach einem der Ansprüche 4-9 mit einer oder mehreren Härteeigenschaften bei 20 °C, wie mit einem Texturanalysator (TA-XT2i, Stable Microsystems) bestimmbar:

- einer Anfangshärte in dem Bereich von 100-1000 g, vorzugsweise 200-600 g
- einer Härte nach 1 Woche in dem Bereich von 100-1000 g, vorzugsweise 200-600 g
- einer Härte nach 60 Tagen in dem Bereich von 100-1000 g, vorzugsweise 200-800 g
- einer Härte nach 90 Tagen in dem Bereich von 100-1000 g, vorzugsweise 200-800 g
- einer Härte nach 120 Tagen in dem Bereich von 100-1000 g, vorzugsweise 200-800 g
- einer Härte nach 150 Tagen in dem Bereich von 100-1200 g, vorzugsweise 200-1000 g
- einer Härte nach 180 Tagen in dem Bereich von 100-2000 g, vorzugsweise 200-1250 g.

**11.** Süßwarenmasse nach einem der Ansprüche 4-10, umfassend 32-65 Gew.-%, vorzugsweise 33-60 Gew.-%, bevorzugter 34-60 Gew.-%, insbesondere 35-55 Gew.-%, Protein bezogen auf das Gesamtgewicht.

**12.** Süßwarenmasse nach einem der Ansprüche 4-11, zusätzlich umfassend wenigstens ein Oligosaccharid ausgewählt aus Fructooligosacharid (FOS) und Galactooligosaccharid (GOS), höchst bevorzugt ausgewählt aus GOS, wobei die Gesamtmenge an GOS und FOS in der Süßwarenmasse, bezogen auf das Gesamtgewicht der Süßwarenmasse, vorzugsweise bis zu 50 Gew.-%, bevorzugter 1-20 Gew.-% und höchst bevorzugt 5-10 Gew.-%, beträgt.

**13.** Verfahren zur Herstellung eines Süßwarenprodukts mit einer geometrischen Form, wie z.B. einem Riegel, umfassend Formen einer Süßwarenmasse nach einem der Ansprüche 4-12 zu einer gewünschten Form für das Süßwarenprodukt.

## Revendications

**1.** Procédé de préparation d’une masse de confiserie, comprenant au moins 30 % en poids par rapport au poids total de protéines, le procédé comprenant le mélange

(i) d’une poudre de caséinate métallique divalent ayant une ou plusieurs des propriétés suivantes :

- une densité apparente tassée, ISO 8967/IDF 134:2005 625 tapes, de 575 à 750 g/l,
- une densité réelle (air), comme déterminée par pycnométrie à gaz de 1,30 à 1,32 g/cm$^3$

avec
(ii) une phase liquide comprenant un ou plusieurs autres ingrédients pour la masse de confiserie, obtenant ainsi ladite masse de confiserie.

**2.** Procédé selon la revendication 1, dans lequel la poudre de caséinate métallique divalent a été obtenue en soumettant le caséinate métallique divalent obtenu par séchage au rouleau dans une phase aqueuse à un traitement de densification choisi dans le groupe du broyage à sec, du compactage à sec et de l’extrusion à sec, de préférence le broyage à sec, plus préférablement le broyage à broches.

**3.** Procédé selon la revendication 1 ou 2, dans lequel le caséinate métallique divalent est le caséinate de calcium ou le caséinate de magnésium.

**4.** Masse de confiserie comprenant au moins 30 % en poids sur la base du poids total de protéines, au moins 20 % en poids, de préférence 30 à 90 % en poids, plus préférablement 40 à 80 % en poids, en particulier 50 à 75 % en poids des protéines étant un caséinate métallique divalent, lequel caséinate métallique divalent est fourni par une poudre de caséinate métallique divalent ayant une ou plusieurs des propriétés suivantes :

- une densité apparente tassée, ISO 8967/IDF 134:2005 625 tapes, de 575 à 750 g/l,
- une densité réelle (air), déterminée par pycnométrie à gaz de 1,30 à 1,32 g/cm$^3$.

**5.** Masse de confiserie selon la revendication 4, dans laquelle la poudre de caséinate métallique divalent a été obtenue en soumettant le caséinate métallique divalent obtenu par séchage au rouleau dans une phase aqueuse à un traitement de densification choisi dans le groupe du broyage à sec, du compactage à sec et de l'extrusion à sec, de préférence le broyage à sec, plus préférablement le broyage à broches.

**6.** Masse de confiserie selon la revendication 4 ou 5, dans laquelle le caséinate métallique divalent est le caséinate de calcium ou le caséinate de magnésium.

**7.** Masse de confiserie selon l'une quelconque des revendications 4 à 6, dans laquelle 8 à 80 % en poids, de préférence 10 à 70 % en poids, plus préférablement 20 à 50 % en poids des protéines sont des protéines de lactosérum.

**8.** Masse de confiserie selon l'une quelconque des revendications 4 à 7, dans laquelle 8 à 80 % en poids, en particulier 10 à 70 % en poids, plus particulièrement 20 à 50 % en poids des protéines sont de la caséine acide ou de la caséine présure.

**9.** Masse de confiserie selon l'une quelconque des revendications 4 à 8, dans laquelle 85 à 100 % en poids, de préférence 95 à 100 % en poids, en particulier 98 à 100 % en poids des protéines totales sont des protéines de lait.

**10.** Masse de confiserie selon l'une quelconque des revendications 4 à 9, ayant une ou plusieurs caractéristiques de dureté à 20 °C, comme pouvant être déterminées avec un analyseur de texture (TA-XT2i, Stable Microsystems) :

- une dureté initiale dans la plage de 100 à 1 000 g, de préférence 200 à 600 g
- une dureté après 1 semaine dans la plage de 100 à 1 000 g, de préférence 200 à 600 g
- une dureté après 60 jours dans la plage de 100 à 1 000 g, de préférence 200 à 800 g
- une dureté après 90 jours dans la plage de 100 à 1 000 g, de préférence 200 à 800 g
- une dureté après 120 jours dans la plage de 100 à 1 000 g, de préférence 200 à 800 g
- une dureté après 150 jours dans la plage de 100 à 1 200 g, de préférence 200 à 1 000 g
- une dureté après 180 jours dans la plage de 100 à 2 000 g, de préférence 200 à 1 250 g.

**11.** Masse de confiserie selon l'une quelconque des revendications 4 à 10, comprenant 32 à 65 % en poids, de préférence 33 à 60 % en poids, plus préférablement 34 à 60 % en poids, en particulier 35 à 55 % en poids de protéines sur la base du poids total.

**12.** Masse de confiserie selon l'une quelconque des revendications 4 à 11, comprenant en outre au moins un oligosaccharide choisi parmi le fructo-oligosacharide (FOS) et le galacto-oligosaccharide (GOS), le plus préférablement choisi parmi GOS, dans laquelle la quantité totale de GOS et FOS dans la masse de confiserie, sur la base du poids total de la masse de confiserie, est de préférence jusqu'à 50 % en poids, plus préférablement 1 à 20 % en poids, et le plus préférablement 5 à 10 % en poids.

**13.** Procédé de préparation d'un produit de confiserie ayant une forme géométrique, telle qu'une barre, comprenant la mise en forme d'une masse de confiserie selon l'une quelconque des revendications 4 à 12 en une forme souhaitée pour ledit produit de confiserie.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2004142093 A1
- WO 2005089255 A
- EP 1839496 A
- EP 1839496 A1


### Non-patent literature cited in the description


- **BANACH et al.** Particle Size of Milk Protein Concentrate Powder Affects the Texture of High-Protein Nutrition Bars During Storage. *Journal of Food Science*, 2017, vol. 82 (4), 913-921
- **WALSTRA, P et al.** Dairy Science and Technology. CRC Press, 2006, 538-539
- **BUMA T.J.** The true density of spray milk powder and of certain constituents. *Netherlands Milk and Dairy Journal*, 1965, vol. 19, 249-265